# EUROPEAN PATENT SPECIFICATION

(11) **EP 0 342 625 B1**
(45) Date of publication and mention of the grant of the patent: **23.03.1994**
(21) Application number: 89108829.6
(22) Date of filing: 17.05.1989
(51) Int. Cl.: G11B 21/21

(54) **Head suspension mechanism for a recording apparatus**
Kopfaufhängungsvorrichtung für ein Aufzeichnungsgerät
Mécanisme de suspension de tête pour un appareil d'enregistrement

(30) Priority: 18.05.1988 JP 122808/88; 18.05.1988 JP 122809/88
(43) Date of publication of application: 23.11.1989
(73) Proprietor: FUJITSU LIMITED, Kawasaki-shi, Kanagawa 211 (JP)
(72) Inventor: Owe, Takeshi c/o Fujitsu Limited Patent Dept., Kawasaki-shi Kanagawa 211 (JP); Mizoshita, Yoshifumi c/oFujitsu Limited Patent Dep, Kawasaki-shi Kanagawa 211 (JP)
(74) Representative: Sunderland, James Harry

(56) References cited:
- DE-A- 3 540 886
- JP-A-61 273 783
- JP-A-63 188 856
- US-A- 4 034 412
- IBM TECHNICAL DISCLOSURE BULLETIN. vol. 26, no. 2, July 1983, NEW YORK US pages 846 - 849; MAY: "TWO-STAGE DISK FILE ACTUATOR"

## Description

The present invention relates to recording apparatus, such as a magnetic recording apparatus or optical recording apparatus, and concerns the head suspension mechanism for such recording apparatus.

As is widely known, in a magnetic or an optical recording apparatus, a magnetic or an optical transducer, a head, is mounted on an airbearing head slider (hereinafter referred to simply as a head slider) which is suspended or flexibly supported by a suspension mechanism (a head suspension mechanism). Such a head suspension mechanism is required to have a rigid structure capable of withstanding a high-speed accessing movement of the head slider and a mechanism of sufficient resilience to maintain a predetermined, constant spacing (called flying height) between a rotating recording medium of the apparatus (e.g. a disk) and the head slider flying over the disk.

The head suspension mechanism is secured to a rigid arm of a head actuator (a head positioner) which translates the head slider in directions substantially radial with respect to the disk, to access a track on the disk. The transducer is, for instance, an electromagnetic transducer (a magnetic head) or an optical head, depending on the type of the relevant recording apparatus.

In order to make the head slider fly over the surface of a recording medium layer, formed on a rotating disk, with a predetermined spacing (hereinafter referred to as flying height), the head slider is mounted on the free end of the head suspension mechanism, usually on the free end of a load beam.

With the above configuration, the head slider is urged towards the associated recording medium with a static load applied by the head suspension mechanism when the disk is at rest. Hereinafter, the static load is referred to as 'initial static load'. The head slider is statically pressed against the disk when the head suspension mechanism is set in a predetermined position with respect to the recording medium, usually a recording medium layer formed on the disk. With this configuration, a resilient section of the head suspension mechanism, namely a load beam, causes resilient force to apply an initial static load to the head slider.

When the disk is rotating at a rotational speed such as 3600 rpm, the head slider, flexibly supported by the head suspension mechanism, is subject to an aerodynamic lifting force caused by an air flow generated by the rotation of the disk, and is floated or flys over the surface of the disk.

The flying height of the head slider is determined by the balance between the aerodynamic lifting force and the initial static load. The aerodynamic lifting force is determined by the surface circumferential speed of the associated recording medium disk when it is in rotation. Consequently, the initial static load to be applied to the head slider is approximately determined by the operational rotational speed and the radius of the disk, and the resilient characteristics of the head suspension mechanism.

The flying height is desirably as small as possible, with a view to providing a high resolution capability for the transducer, but should be sufficiently large to avoid contact between the transducer and the rotating recording medium. As disk recording density has increased, flying height has been reduced down to the sub-micron range, for example less than 0.5 microns.

The accuracy with which the initial static load is set depends on the accuracy of the associated mechanism, for example the load beam. In particular, the resilient section of a previously proposed load beam has usually been subject to a plastic deformation at a working step wherein the section is formed to a shape which is to some degree curved. Precise working for forming the resilient section is difficult since the load beam is made of a spring material such as stainless steel. Inaccurate dimensioning of the resilient section can result in an undesirable initial static load. As a result, adjustment work needed to realise and maintain a desired flying height of the head slider over the disk, within required or allowable fluctuation limits, has been a very difficult and delicate matter. This has represented a serious problem, dealt with only by meeting requirements for extremely high accuracy fabrication of parts and precise assembly work of the head suspension mechanism. Further, elaborate and time-consuming work has inevitably been needed for adjusting the once-assembled head suspension mechanism to correct the resulting flying height after assembly of the head suspending mechanism.

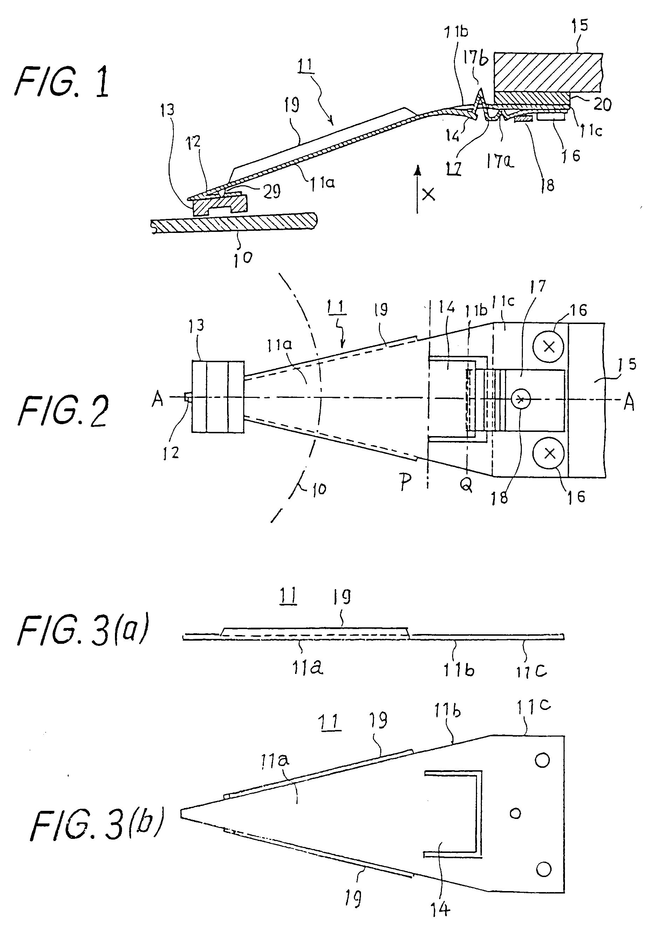

Watraus has disclosed a transducer suspension mechanism having a structure as described above, in U.S. Patent Serial No. 4 167 765, published on 11th September 1979. In the side view shown in Fig. 2 of Watraus, a resilient spring section appears to be straight, and thus the whole suspension element 10 appears to be flat. However, the resilient spring section 16 must have a form curving downward when the element 10 is worked as one of the parts of the apparatus, otherwise the initial static load pressure toward the disk 24 cannot be provided. Consequently, the Watraus mechanism does not escape the above-described problem.

In efforts to avoid the above-described problem, a variety of forms of pressing member, engaging with a load beam to provide a pressure towards the disk, have been proposed in the past. A commonly observed feature of these proposed head suspension mechanisms is that a load beam mainly carries a head slider and a pressing member provides an initial static load for the head slider through the load beam. That is, the roles of carrying the head slider and of pressing the same are separated, being individual assigned to different parts, a load beam and a pressing member.

Yamada has proposed an improved transducer suspension mechanism having the above-mentioned feature, in Unexamined Japanese Patent Application No. 62-248178, published on 29th October 1987 The head suspension mechanism of Yamada, as shown in Fig. 1 and Fig. 2 of his disclosure, has an appearance similar to that of Watraus mechanism except for a pressing member comprising a supporting arm 31 and a pressing spring 40 which is secured to the free end of the arm 31. The pressing spring 40 directly acts on the relevant head slider 50 from a rear side thereof, through a protuberance 25. The advantage of this configuration lies in the fact that the resilient section 18 is flat and need not be subject to plastic deformation to be formed in a curved or a cylindrical plane, being free from the above-mentioned difficulty in its formation. However, the load provided by the pressing spring and directly applied to the head slider is required to have the same order of accuracy as that required for the head slider. Thus, the problem of attaining sufficient accuracy in the formation of the spring 40 and setting of the pressing member still arises.

Meanwhile, Mizoshita, a co-inventor of the invention of the present application, has also disclosed a transducer suspension mechanism in Unexamined Japanese Patent Application No. 61-273783, published on 4th December 1986. As shown in Fig. 1 and Fig. 2 of his disclosure, an auxiliary spring 21 having a frictional protuberance 22 is disposed to press on a rigid section of a load beam through the protuberance 22. A resilient section 2 of the load beam is worked to lie in a curved plane, as in Watraus, and pressure applied to a head slider 4 is the resultant of pressures caused by the resilient portion 2 and the spring 21. The most favourable advantage of the Mizoshita mechanism is that it provides a dumping function for mechanical oscillations which are caused by quick stop and start movements of the head slider for accessing operations. According to the Mizoshita disclosure, mechanical vibration of the load beam is damped by the mutual friction between the surface of the rigid section of the load beam and the frictional protuberance 22 both of which are moving in a mutual rubbing motion.

Because of the severe accuracy requirements which must be met when getting a pressure loaded on a head slider, adjustment means, for adjusting this load, is desirable. Adjusting means is disclosed, for example, in Unexamined Japanese Patent Application No. 63-188856, published on 4th August 1988, by Kuzuhara, although this disclosure relates to a head suspension mechanism of a magnetic head recording apparatus employing floppy disks, wherein magnetic heads are not of a floating type, being often in contact with surfaces of floppy disks. Magnetic heads, as shown in Fig. 1 of the disclosure, are pressed against a floppy disk 15 through a gimbal plate 13, spring plate 16, and an adjusting spring 17 the pressure of which is adjusted by an adjusting screw 20.

DE-A-3 340 886 discloses a mechanism having features corresponding to those of the preamble of accompanying claim 1.

According to the present invention, there is provided a head suspension mechanism for a recording apparatus, the mechanism serving to carry a transducer head over a rotating recording medium of the apparatus, the mechanism comprising:-
a load beam, having a rigid section, a resilient section and a holding section, adjacent one to another in the recited order, the rigid section having a free end at which the transducer head is located, the resilient section allowing movement of the said free end towards and away from the recording medium, and the holding section being secured to a rigid supporting part of the recording apparatus; and
a pressing member, of resilient material, one end of which is secured to said rigid supporting part and the other end of which bears upon the resilient section of the load beam to apply a load thereto such as to urge the said free end towards the recording medium;
characterised in that:-
the resilient section of the load beam has a tongue part therein, the free end of which tongue part is contacted by the said other end of the pressing member.

An embodiment of the present invention can provide a head suspension mechanism such that a correct flying height of a head slider mounted thereon can be easily and precisely provided.

An embodiment of the present invention can provide a head suspension mechanism whose parts can be accurately fabricated, and whose assembly is relatively easy and accurately provides the head slider with a predetermined static load.

In an embodiment of the present invention, the load beam is composed of the rigid section, resilient section, and holding section, connected one to another in the recited order, and produced in one piece. The rigid section is reinforced by turned-up flanges formed at both sides thereof. The resilient section is flat and not subject to any mechanical deformation work during fabrication of the load beam. The holding section is secured to a rigid arm of the relevant head actuator for positioning the head slider to different tracks on the relevant recording medium. The whole load beam is held in a cantilever arrangement which is secured at the holding section and is free at the opposite end where the head slider is attached.

Although the load beam holds the head slider at its free end, the load beam of itself does not provide the head slider with pressure loading, since the resilient section is made flat originally. Instead, the pressing member loads the head slider with a static pressure directed toward the relevant recording medium, by pressing the load beam at a position located within the resilient section, whereby the rigid section of the load beam is inclined towards the recording medium, and the resilient section is elastically deformed.

The position at which the pressing member presses on the load beam is properly selected. The position is selected to be as far as possible from the head slider. With this configuration, the loading force exerted by the pressing member is in effect increased, because the predetermined static initial pressure at the head slider is magnified in accordance with the lever principle. The increase in the loading force of the pressing member provides for easier adjustment of the force in comparison with a case in which a lower loading force is provided. The pressing member is made of resilient material and the loading force is provided by pressing or deforming the pressing member, such that the head slider of the load beam is pressed toward the recording medium, by adjustably feeding a screw. Thereby, the loading force of the pressing member can be precisely and easily adjusted, improving the properties of the head suspension mechanism with regard to adjustment of the initial static load. As a result, the flying height of the head slider flying over the recording medium (the rotating disk) is maintained at a predetermined height with favourable accuracy and reliability.

The tongue section, formed in a portion of the resilient section of the load beam, extends in the longitudinal direction of the load beam. The pressing member presses the tongue section by its free end, either towards the recording disk side of the tongue section or towards its opposite side. The force of the pressing member is adjusted by an adjusting means, usually a screw.

Reference is made, by way of example, to the accompanying drawings, in which:-
Fig. 1 is a schematic cross-sectional view of a head suspension mechanism in accordance with an embodiment of the present invention,
Fig. 2 is a schematic plan view of the head suspension mechanism of Fig. 1, seen from the side at which a recording medium disk would be disposed, that is, in the direction of the arrow X in Fig. 1,
Fig. 3(a) is a schematic side view of a load beam of the head suspension mechanism of Fig. 1,
Fig. 3(b) is a schematic plan view of the load beam of Fig. 3(a),
Figs. 4(a) to (d) are extremely schematic side views, illustrating in particular deflection of the load beam of the head suspension mechanism of Fig. 1, at different stages in the fabrication of the head-disk assembly of recording apparatus using the head suspension mechanism, and in different operating conditions,
Fig. 5 is a schematic cross-sectional view of a head suspension mechanism in accordance with another embodiment of the present invention,
Fig. 6 is a plan view of the head suspension mechanism of Fig. 5, seen from the side at which a recording medium disk would be disposed, that is, in the direction of the arrow Y in Fig. 5, and
Fig. 7 is a perspective view of a modified fulcrum edge, which can be used in the mechanism of Figs. 5 and 6, having two protruding portions at its opposite ends.

The head suspension mechanism in accordance with one embodiment of the present invention, illustrated in Figs. 1 and 2, has a form which is substantially symmetric about a symmetry axis AA, indicated by a chain line in Fig. 2. The head suspension mechanism comprises, a head slider 13 and a substantially resilient load beam 11. The head slider 13 is suspended at a free end of the load beam 11, the other end of which is secured to a rigid supporting arm 15 of a head actuator assembly (not shown) through a spacer 20, using screws 16. The head slider 13 contains or carries an electromagnetic transducer and is suspended at the apex of the load beam 11 through a gimbal 12 which holds the head slider 13 flexibly movably. The initial static load is applied to the head slider 13 through a protuberance 29 directed towards the centre of gravity of the head slider 13 or a point near the centre of gravity. The structures of the gimbal 12 and the head slider 13 are conventional and hence further description of those structures is omitted.

In Figs. 1 and 2, a recording medium disk 10 is shown in position relative to the head suspension mechanism as in an assembled recording apparatus.

The load beam 11 comprises a rigid section 11a having a substantially triangular shape, being reinforced by turned-up side flanges 19 formed along both sides thereof, a resilient section 11b, and a holding section 11c. The rigid section 11a, resilient section 11b, and holding section 11c are adjacent one to another in the order stated and are formed in a single piece body by punching and pressing a resilient metal plate such as a resilient stainless steel plate. The load beam 11, as one of the parts of the head suspension mechanism, is illustrated in the side view of Fig. 3(a) and the plan view of Fig. 3(b). The resilient section 11b of the load beam 11, as shown in Fig. 3(a), is flat and, in its fabrication, is not subject to any mechanical working involving plastic deformation to provide the resilient section 11b with a curved form. This means that the problem regarding the accuracy of the dimensions of the load beam encountered in previous head suspension mechanisms is completely or substantially avoided. The resilient section 11b of itself applies no resilient force to the head slider 13. Only when the resilient section 11b is flexibly deformed by a pressing member 17 is such force applied. Thus, the head slider 13 is loaded or biassed towards the associated disk 10 with an initial static load. That is, the initial static load is generated by a pressing member 17 which is described below. The load beam 11 is secured to the rigid supporting arm 15 at the holding section 11c of the beam by means of screws 16, and consequently the holding section 11c is kept rigid and is not subject to deformation.

In this embodiment, in a centre portion of the resilient section 11b, as shown in Fig. 1 and Fig. 2, a tongue section 14 is formed by cutting a slit of U-letter-like shape extending along the symmetry axis A of the head suspension mechanism. The root of the tongue section 14, at which the tongue is turned up (at which the tongue is bent) is shown by a chain line P in Fig. 2. The root line P is taken to be perpendicular to the symmetry axis A.

The head suspension mechanism in this embodiment of the present invention is energised or biassed by a pressing member 17. One end of the pressing member 17 is secured to a portion of the supporting member 15, together with the holding section 11c of the load beam 11, by the screws 16. An adjusting screw 18 is set in the rigid supporting member 15 in the neighbourhood of the screws 16, penetrating through the pressing member 17. The head of the adjusting screw 18 is hooked on the surface of the pressing member 17 in order to selectively press and deform the pressing member 17, which is made from thin stainless plates. The screw may carry a spring washer as a resilient locking member. The pressing member 17 is formed with a multi-folded form, folded in directions perpendicular to the symmetry axis AA, having a hairpin-like longitudinal cross-section. As shown in Fig. 1, the pressing member 17 has two bent portions, with creases 17a and 17b. The first crease 17a is in contact with the back surface of the holding section 11c of the load beam 11. When the adjusting screw is fed forward (screwed in), then the pressing member 17 is deformed by being pressed by the screw head of the screw 18 toward the supporting member 15, and the front portion of the pressing member including the second crease 17b is slightly rotated around the first crease 17a. Thereby, the free end of the pressing member 17 is lowered as the adjusting screw 18 is fed forward (screwed in), to make the free end of the pressing member 17 contact the tongue section 14 along a line Q (indicated by a chain line in Fig. 2) and press the top end portion of the tongue section 14 toward the disk 10. The load applied to the tongue section 14 is adjusted by adjusting the deformation of the pressing member 17. Thus, the initial static load of the head slider 13 is favourably achieved by selecting an appropriate feed distance of the screw 18.

With the above-described configuration, by feeding forward the screw 18, the tongue section 14 of the load beam 11 is pressed towards the recording medium disk 10 by the free end of the pressing member 17 which is in contact with the tongue section 14 at the top end portion thereof. Consequently, the tongue section 14 is deflected toward the disk 10, and simultaneously the resilient section 11b is elastically deformed, in a rounded or curved fashion, towards the disk 10. Thereby, load applied by the load beam 11 is effective at the head slider 13 to press the head slider 13 towards (on to) the disk 10 (when the disk is at rest), providing an initial static load. The initial static load is easily adjusted by adjusting the feed distance of the adjusting screw 18. In addition, adjustment can be performed even when the disk 10 is rotating. Thus, by adjusting the initial static load applied to the disk 10, an appropriate flying height for the head slider 13 over the disk 10 is easily and steadily maintained.

Use of a tongue section, such as tongue section 14 in this embodiment of the invention, has a further advantage. Generally, in a head suspension mechanism, the head slider 13 moves up and down following repeated upward and downward movements of the rotating disk 10 with which the head slider 13 engages. In addition, access movements of the relevant head actuator can generate considerable vibration, adversely affecting the head slider 13. Minute mechanical vibrations of the load beam 11 can be caused. By introducing the structure of the resilient tongue section 13, the effects of such vibrations are reduced. Furthermore, rigidity against torsion effects and bending effects caused by quick accessing movements, mostly repeated stop and start movements, is enhanced with the structure of the head suspension mechanism of this embodiment, because the tongue section 14 is pressed toward the disk 10 with a contact line extending along line Q which is perpendicular to the symmetry axis AA.

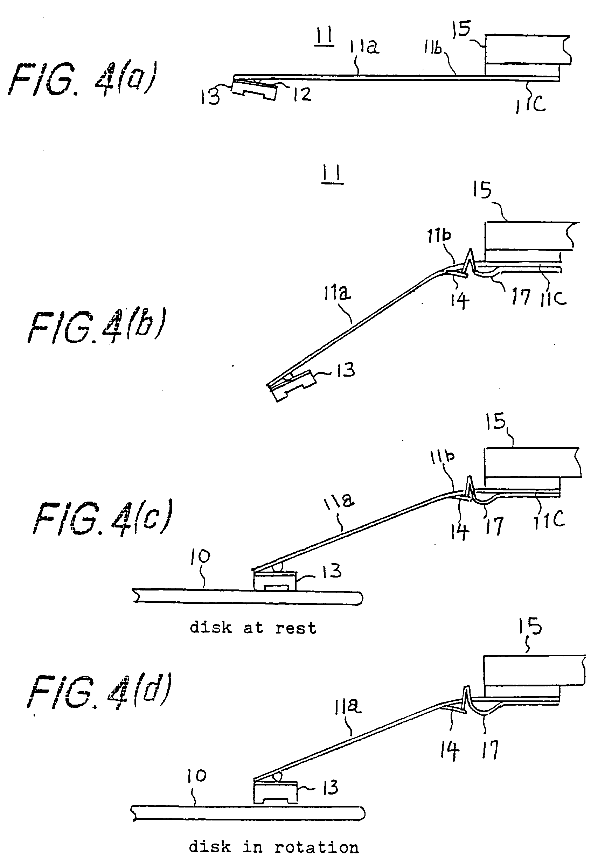

Fig. 4(a) to Fig. 4(d) are extremely schematic side views primarily illustrating the load beam, illustrating the deflection of the load beam 11 at various stages of fabrication and operation of the head-disk assembly of recording apparatus having the head suspension mechanism of Fig. 1.

Fig. 4(a) is the side view of the load beam at a fabrication stage before the pressing member is put in place. The resilient section 11b is flat, having been subject to no plastic deformation work.

Fig. 4(b) shows the load beam at a stage after the assembly of the head suspension mechanism, with the pressing member in place. The pressing member 17 presses the tongue section 14 of the load beam 11 on the line Q, and the resilient section 11b is flexibly deflected downward (as seen in the Figure). The head slider 13 is free.

Fig. 4(c) shows a stage where the head suspension mechanism is in engagement with a disk 10 at rest. The head slider 13 is in contact with the disk 10. The head slider 13 is relatively lifted up, as compared with its disposition in Fig. 4(b), and the tongue section 14 is further deflected downward, so that the load beam 11 provides the initial static load at its apex, acting towards the disk 10, through the head slider 13.

Fig. 4(d) represents the load beam 11 with the disk 10 rotating. Aerodynamic lift resulting from air flow caused by rotation of the disk 10 lifts the head slider 13 over the disk 10 so that they are spaced one from another by a gap, namely, the predetermined flying height.

Another embodiment of the present invention will now be described. This embodiment is similar to (follows the same technical principles) as the above-described embodiments, except for the pressing member.

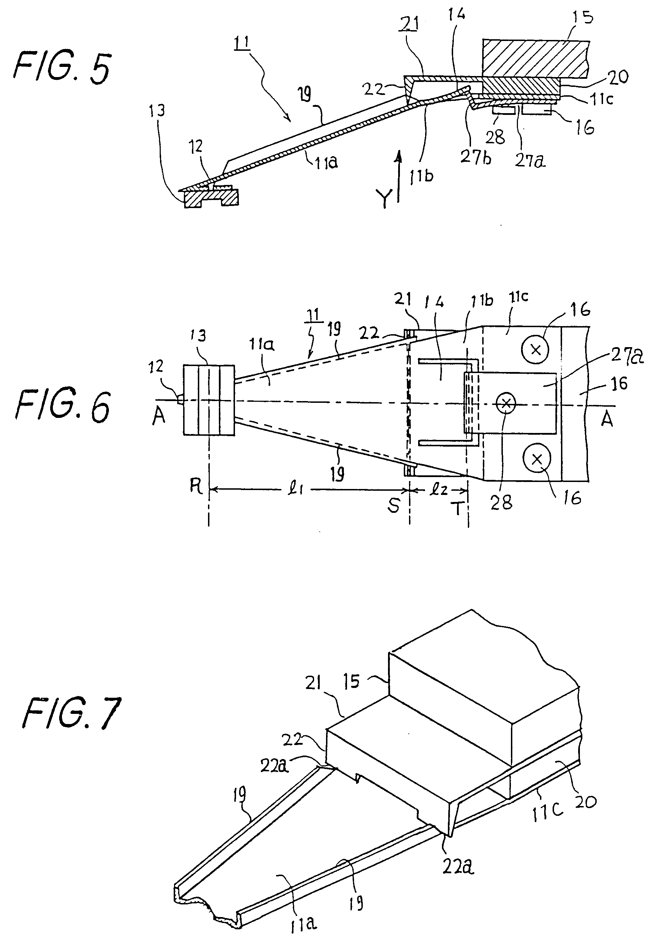

Fig. 5 is a schematic cross-sectional view of the head suspension mechanism of this further embodiment of the present invention, in an associated head-disk assembly, and Fig. 6 is a plan view of the head suspension mechanism of Fig. 5 seen from the side of the recording medium (e.g. disk), namely in a direction indicated by an arrow Y in Fig. 5.

The structures of a load beam 11 including rigid section 11a, resilient section 11b, and holding section 11c, gimbal 12, head slider 13, tongue section 14, supporting arm 15 of the relevant head actuator (not shown), fixing screws 16, and spacer 20 are the same as those of the above-described embodiment.

In the further embodiment of Fig. 5, a fulcrum supporting member 21 is provided, being formed in a single piece with the spacer 20 at one thereof, and having a cross-section of hook-like shape providing a projecting portion 22 directed toward the disk 10 at the other end thereof. On the end of the projecting portion 22, a fulcrum edge 22a having the form of a knife edge is formed to pivotally support the load beam 11 at a line S (shown by a chain line) on the surface of the load beam 11 at a side of the beam opposite to that at which the disk 10 is disposed. The line S is perpendicular to the symmetry axis AA and is located in the vicinity of a boundary line at which the resilient section 11a and the resilient section 11b meet.

Of course, the spacer 20 and the fulcrum member 21 may be formed separately.

There is also provided a pressing member 27 made from resilient metal plate, such as resilient stainless steel plate, having a hook-like shaped side cross-section comprising a main part 27a and a projecting part 27b turned up from the main part 27a. The pressing member 27 is secured to the rigid arm 15 of the head actuator, together with the holding section 11c of the load beam 11, by screws 16, at a rear portion of the main part 27a. The edge of the projecting part 27b, which is disposed at a front portion of the pressing member 27, is directed towards a side opposite to the disk 10 (is directed generally away from the disk), contacting the free end of the tongue section 14 at a line T, as indicated by a chain line in Fig. 6. The pressing member 27 provides the tongue section 14 with a load in a direction opposite to (away from) the disk 10 by feeding an adjusting screw 28 forward. The screw 28 corresponds to the screw 18 of the embodiment of Fig. 1 and is set in the supporting member 15 in a similar manner.

As a result, in the head-disk assembly, the front portion of the major part 27a of the pressing member 27 is flexibly deflected such that the projecting part 27b proceeds (deflects) in a direction opposite (away from) the disk 10, imposing a loading force Fa on a portion of the tongue section 14 near the free end of the section 14 along the line T. Since the load beam 11 is pivotally supported at the fulcrum edge 22a, the loading force Fa is minimised (reduced) to a loading force Fb which is applied to the head slider 13 by lever action of the load beam 11. The loading force Fb is applied to the head slider 13 through a protuberance 29, and finally applied to the disk 10 as the initial static load. Denoting the distance from the line S to the protuberance 29 as l₁, and the distance from the line T to the line S as l₂ the loading forces Fa and Fb are related as follows:-

$\text{Fa = [l₁/l₂].Fb}$

Ordinarily, in a head suspension mechanism in accordance with the embodiment of Figs. 5 and 6, l₁/l₂ is much larger than 1, hence, a change of Fa causes a relatively small change of Fb. This means that a minor change of the initial static load presented to the head slider 13 can be effected by changing the loading force of the pressing member 27 in accordance with a magnified ratio, namely by l₁/l₂ times the change in the initial static load, leading to an easier and more accurate adjustment of the initial static load of the head slider 13 than is the case with previous head suspension mechanisms, such as that of Yamada.

The edge of the fulcrum supporting member 21 can be further modified as shown in the partial perspective view of Fig. 7. That is, a straight line edge can be replaced by an edge comprising two protruding portions 22a disposed at opposite side ends thereof, as shown in Fig. 7. The edge structure with two end protuberances apparently enhances contact stability between the fulcrum supporting member 21 and the surface of the load beam 11.

Enhancement of the rigidity of the head suspension mechanism in embodiments of the present invention in accordance with Figs. 5, 6 (and 7) is basically similar to that of the first-described embodiment. However, with regard to torsional forces applied to the head suspension mechanism, the embodiments in accordance with Figs. 5 and 6 (and 7) are more favourably rigid than the first-described embodiment.

As can be clearly understood by the above description, in a head suspension mechanism of a head slider according to an embodiment of the present invention, initial static load presented by a load beam can be changed easily by adjusting feed of a screw which adjustably presses a pressing member. As a result, the flying height of the head slider over the associated disk can be maintained at a predetermined height.

The above-described embodiments concern applications of the present invention to a magnetic recording apparatus, but the embodiments of the present invention are applicable also to head suspension mechanisms for flying head sliders of optical recording apparatus.

An embodiment of the present invention provides a head suspension mechanism of a recording apparatus for flexibly carrying a transducer in a floating state. The mechanism comprises a head slider, a load beam, a spring plate, and an adjusting screw. The load beam is composed of a rigid section, a resilient section, and a holding section disposed in the recited order. The head slider is suspended at the free end of the rigid section through a gimbal. The load beam is secured to a supporting arm of the relevant head actuator of the apparatus at the holding section, and is subject to a pressure applied by the spring plate at the resilient section. The pressure is easily and precisely adjustable using the adjusting screw. Thus, the head slider is loaded on the disk (at rest) with a predetermined static load in order to maintain a favourable flying height of the head slider over the disk when rotating. With the above configuration, the pressure provided by the spring plate is substantially greater as compared with the load to be presented to the head slider, contributing to the realisation of easy and precise adjustment of the loading force.

## Claims

1. A head suspension mechanism for a recording apparatus, the mechanism serving to carry a transducer head over a rotating recording medium (10) of the apparatus, the mechanism comprising:-
a load beam (11), having a rigid section (11a), a resilient section (11b) and a holding section (11c), adjacent one to another in the recited order, the rigid section (11a) having a free end at which the transducer head is located, the resilient section (11b) allowing movement of the said free end towards and away from the recording medium (10), and the holding section (11c) being secured to a rigid supporting part (15) of the recording apparatus; and
a pressing member (17, 27), of resilient material, one end of which is secured to said rigid supporting part (15) and the other end of which bears upon the resilient section (11b) of the load beam (11) to apply a load thereto such as to urge the said free end towards the recording medium (10);
characterised in that:-
the resilient section (11b) of the load beam (11) has a tongue part (14) therein, the free end of which tongue part (14) is contacted by the said other end of the pressing member (17, 27).

2. A head suspension mechanism as claimed in claim 1, wherein the said rigid supporting part (15) is a rigid supporting arm of a head actuator of the recording apparatus, and the mechanism comprises a head slider (13), suspended at the said free end of the rigid section of the load beam (11) through a gimbal (12) and to which the transducer head is attached.

3. A head suspension mechanism as claimed in claim 1 or 2, wherein the resilient section (11b) of the load beam (11) is formed to be flat, when it is free from any applied force, and is not subject to any plastic deformation during its fabrication.

4. A head suspension mechanism as claimed in claim 1, 2 or 3, further comprising adjusting means (18, 28), effective to adjustably deform the pressing member (17, 27) thereby to adjust the load applied to the load beam (11) by the pressing member.

5. A head suspension mechanism as claimed in claim 4, wherein the adjusting means (18, 28) comprise a screw penetrating through the pressing member (17, 27) and engaging with the said rigid supporting part (15) such that the extent to which the screw (18, 28) is screwed into the rigid supporting part (15) affects the deformation of the pressing member (17, 27).

6. A head suspension mechanism as claimed in claim 5, wherein the head of the screw (18, 28) engages the pressing member (17, 27), to bear on, deform and bias the pressing member as the screw is screwed in.

7. A head suspension mechanism as claimed in claim 5 or 6, wherein the screw (18, 28) carries a spring washer as a resilient locking member.

8. A head suspension mechanism as claimed in any preceding claim, wherein in the load beam (11), the tongue part (14) of said resilient section (11b) extends longitudinally of the load beam (11) with the free end of the tongue part (14) towards the holding section (11c) of the load beam.

9. A head suspension mechanism as claimed in any preceding claim, wherein the said other end of the pressing member (17, 27) has a straight line edge which contacts the tongue part (14) along a line (Q).

10. A head suspension mechanism as claimed in any preceding claim, wherein the pressing member (17, 27) is a folded spring plate, having a plurality of folding creases perpendicular to the longitudinal axis of the load beam (11), one end of the spring plate bearing on the resilient section (11b) of the load beam.

11. A head suspension mechanism as claimed in claim 10 when read as appended to claim 4 directly or indirectly, wherein displacement of the adjusting means (18, 28) deforms the spring plate (17, 27) and displaces the said one end of the spring plate.

12. A head suspension mechanism as claimed in claim 10 or 11, wherein the pressing member (17, 27) comprises a stainless steel spring plate of uniform thickness.

13. A head suspension mechanism as claimed in any preceding claim, further comprising a fulcrum support member (21) secured at its one end to the rigid supporting part (15) and providing a fulcrum edge (22a) at its other end, the fulcrum edge contacting the resilient section (11b) of the load beam (11) adjacent the rigid section (11a) of the load beam, the load beam being thereby pivotable around the fulcrum edge (22a).

14. A head suspension mechanism as claimed in claim 13, read as appended to claim 10, 11 or 12, wherein the displacement of the said one end of the spring plate pivots the load beam (11) around the fulcrum edge (22a).

15. A head suspension mechanism as claimed in claim 13 or 14, wherein the fulcrum edge (22a) has a plurality of projecting portions whereby contact with the load beam (11) is provided by point contacts at the projecting portions.

## Patentansprüche

1. Ein Kopfaufhängungsmechanismus für eine Aufzeichnungsvorrichtung, welcher Mechanismus dazu dient, um einen Wandlerkopf über einem rotierenden Aufzeichnungsmedium (10) der Vorrichtung zu tragen, wobei der Mechanismus umfaßt:-
einen Lastbalken (11) mit einem starren Abschnitt (11a), einem federnden Abschnitt (11b) und einem Halteabschnitt (11c), die in der genannten Reihenfolge aneinander angrenzen, wobei der starre Abschnitt (11a) ein freies Ende hat, an dem sich der Wandlerkopf befindet, der federnde Abschnitt (11b) eine Bewegung des genannten freien Endes zu dem Aufzeichnungsmedium (10) hin und von ihm weg gestattet, und der Halteabschnitt (11c) an dem starren Stützteil (15) der Aufzeichnungsvorrichtung befestigt ist; und
ein Druckglied (17, 27) aus federndem Material, dessen eines Ende an dem genannten starren Stützteil (15) befestigt ist, und dessen anderes Ende auf dem federnden Abschnitt (11b) des Lastbalkens (11) lastet, um auf ihn eine Last anzuwenden, um das genannte freie Ende zu dem Aufzeichnungsmedium (10) zu drängen;
dadurch gekennzeichnet, daß:-
der federnde Abschnitt (11b) des Lastbalkens (11) einen Zungenteil (14) in sich hat, von welchem Zungenteil (14) das freie Ende durch das genannte andere Ende des Druckgliedes (17, 27) kontaktiert wird.

2. Ein Kopfaufhängungsmechanismus nach Anspruch 1, bei dem der genannte starre Stützteil (15) ein starrer Stützarm eines Kopfbetätigers der Aufzeichnungsvorrichtung ist, und der Mechanismus einen Kopfgleiter (13) umfaßt, der an dem genannten freien Ende des starren Abschnittes des Lastbalkens (11) durch einen Kardanring (12) aufgehängt ist und an dem der Wandlerkopf angebracht ist.

3. Ein Kopfaufhängungsmechanismus nach Anspruch 1 oder 2, bei dem der federnde Abschnitt (11b) des Lastbalkens (11) gebildet ist, um flach zu sein, wenn er frei von irgendeiner angewendeten Kraft ist, und während seiner Herstellung keiner plastischen Deformation ausgesetzt wird.

4. Ein Kopfaufhängungsmechanismus nach Anspruch 1, 2 oder 3, der ferner ein Einstellmittel (18, 28) umfaßt, das effektiv ist, um das Druckglied (17, 27) einstellbar zu deformieren, um dadurch die Last, die auf den Lastbalken (11) durch das Druckglied angewendet wird, einzustellen.

5. Ein Kopfaufhängungsmechanismus nach Anspruch 4, bei dem das Einstellmittel (18, 28) eine Schraube umfaßt, die durch das Druckglied (17, 27) hindurchdringt und mit dem genannten starren Stützteil (15) im Eingriff steht, so daß das Maß, bis zu dem die Schraube (18, 28) in den starren Stützteil (15) hineingeschraubt wird, die Deformation des Druckgliedes (17, 27) beeinflußt.

6. Ein Kopfaufhängungsmechanismus nach Anspruch 5, bei dem der Kopf der Schraube (18, 28) mit dem Druckglied (17, 27) im Eingriff steht, um auf dem Druckglied zu lasten, es zu deformieren und zu neigen, so wie die Schraube hineingeschraubt wird.

7. Ein Kopfaufhängungsmechanismus nach Anspruch 5 oder 6, bei dem die Schraube (18, 28) eine Federscheibe als federndes Verriegelungsglied trägt.

8. Ein Kopfaufhängungsmechanismus nach irgendeinem vorhergehenden Anspruch, bei dem sich in dem Lastbalken (11) der Zungenteil (14) des genannten federnden Abschnittes (11b) längs des Lastbalkens (11) mit dem freien Ende des Zungenteils (14) zu dem Halteabschnitt (11c) des Lastbalkens erstreckt.

9. Ein Kopfaufhängungsmechanismus nach irgendeinem vorhergehenden Anspruch, bei dem das genannte andere Ende des Druckgliedes (17, 27) eine geradlinige Kante hat, die den Zungenteil (14) längs einer Linie (Q) kontaktiert.

10. Ein Kopfaufhängungsmechanismus nach irgendeinem vorhergehenden Anspruch, bei dem das Druckglied (17, 27) eine gefaltete Federplatte ist, die eine Vielzahl von Falten hat, die zu der Längsachse des Lastbalkens (11) senkrecht sind, wobei ein Ende der Federplatte auf dem federnden Abschnitt (11b) des Lastbalkens lastet.

11. Ein Kopfaufhängungsmechanismus nach Anspruch 10, direkt oder indirekt zusammen mit Anspruch 4, bei dem eine Versetzung des Einstellmittels (18, 28) die Federplatte (17, 27) deformiert und das genannte eine Ende der Federplatte versetzt.

12. Ein Kopfaufhängungsmechanismus nach Anspruch 10 oder 11, bei dem das Druckglied (17, 27) eine rostfreie Stahlfederplatte von gleichförmiger Dicke umfaßt.

13. Ein Kopfaufhängungsmechanismus nach irgendeinem vorhergehenden Anspruch, der ferner ein Lenkstützglied (21) umfaßt, das an seinem einen Ende an dem starren Stützglied (15) befestigt ist und eine Lenkkante (22a) an seinem anderen Ende vorsieht, wobei die Lenkkante den federnden Abschnitt (11b) des Lastbalkens (11) angrenzend an den starren Abschnitt (11a) des Lastbalkens kontaktiert, wodurch der Lastbalken um die genannte Lenkkante (22a) schwenkbar ist.

14. Ein Kopfaufhängungsmechanismus nach Anspruch 13 zusammen mit Anspruch 10, 11 oder 12, bei dem die Versetzung des genannten einen Endes der Federplatte den Lastbalken (11) um die Lenkkante (22a) schwenkt.

15. Ein Kopfaufhängungsmechanismus nach Anspruch 13 oder 14, bei dem die Lenkkante (22a) eine Vielzahl von vorspringenden Abschnitten hat, wodurch ein Kontakt mit dem Lastbalken (11) durch Punktkontakte an den vorspringenden Abschnitten vorgesehen wird.

## Revendications

1. Mécanisme de suspension de tête pour un appareil d'enregistrement, le mécanisme servant à porter une tête à transducteur au-dessus d'un média d'enregistrement en rotation (10) dans l'appareil, le mécanisme comprenant :
- une poutre de charge (11), ayant une section rigide (11a), une section élastique (11b) et une section de maintien (11c), adjacentes les unes aux autres dans l'ordre énoncé, la section rigide (11a) ayant une extrémité libre où est située la tête à transducteur, la section élastique (11b) permettant un mouvement de ladite extrémité libre en direction et en éloignement du média d'enregistrement (10), et la section de maintien (11c) étant fixée à une partie de support rigide (15) de l'appareil d'enregistrement; et
- un élément de pressage (17, 27) en matériau élastique, dont une extrémité est fixée à ladite partie de support rigide (15) et dont l'autre extrémité porte contre la section élastique (11b) de la poutre de charge (11) afin d'appliquer à celle-ci une charge de manière à repousser ladite extrémité libre en direction du média d'enregistrement (10);
caractérisé en ce que
- la section élastique (11b) de la poutre de charge (11) comporte une languette (14) dans celle-ci, l'extrémité libre de ladite languette (14) étant en contact contre l'autre extrémité de l'élément de pressage (17, 27).

2. Mécanisme de suspension de tête selon la revendication 1, dans lequel ladite partie de support rigide (15) est un bras de support rigide d'un actionneur de tête de l'appareil d'enregistrement, et le mécanisme comprend une coulisse de tête (13), suspendue à ladite extrémité libre de la section rigide de la poutre de charge (11) par l'intermédiaire d'une articulation de Cardan (12) et sur laquelle est attachée la tête à transducteur.

3. Mécanisme de suspension de tête selon la revendication 1 ou 2, dans lequel la section élastique (11b) de la poutre de charge (11) est formée de manière à être plane lorsqu'elle est libre de toute force appliquée, et ladite section élastique n'est soumise à aucune déformation plastique pendant sa fabrication.

4. Mécanisme de suspension de tête selon l'une des revendications 1, 2 ou 3, comprenant en outre des moyens de réglage (18, 28) qui agissent afin de déformer de façon réglable l'élément de pressage (17, 27) pour régler de ce fait la charge appliquée à la poutre de charge (11) par l'élément de pressage.

5. Mécanisme de suspension de tête selon la revendication 4, dans lequel les moyens de réglage (18, 28) comprennent une vis qui pénètre à travers l'élément de pressage (17, 27) et qui engage ladite partie de support rigide (15) de telle manière que le degré de vissage de la vis (18, 28) dans la partie de support rigide (15) affecte la déformation de l'élément de pressage (17, 27).

6. Mécanisme de suspension de tête selon la revendication 5, dans lequel la tête de la vis (18, 28) engage l'élément de pressage (17, 27), afin de porter sur l'élément de pressage, de le déformer et de le solliciter, lorsque la vis est vissée.

7. Mécanisme de suspension de tête selon l'une ou l'autre des revendications 5 ou 6, dans lequel la vis (18, 28) porte une rondelle-ressort en tant qu'élément de blocage élastique.

8. Mécanisme de suspension de tête selon l'une quelconque des revendications précédentes, dans lequel, dans la poutre de charge (11), la languette (14) de ladite section élastique (11b) s'étend longitudinalement par rapport à la poutre de charge (11), l'extrémité libre de la languette (14) étant en direction de la section de maintien (11c) de la poutre de charge.

9. Mécanisme de suspension de tête selon l'une quelconque des revendications précédentes dans lequel ladite autre extrémité de l'élément de pressage (17, 27) présente une arête en ligne droite qui vient en contact contre la languette (14) le long d'une ligne (Q).

10. Mécanisme de suspension de tête selon l'une quelconque des revendications précédentes, dans lequel l'élément de pressage (17, 27) est une plaque à ressort repliée, présentant une pluralité de fronces de pliage perpendiculaires à l'axe longitudinal de la poutre de charge (11), une extrémité de la plaque à ressort portant sur la section élastique (11b) de la poutre de charge.

11. Mécanisme de suspension de tête selon la revendication 10, prise directement ou indirectement en dépendance de la revendication 4, dans lequel le déplacement des moyens de réglage (18, 28) déforme la plaque à ressort (17, 27) et déplace ladite extrémité de la plaque à ressort.

12. Mécanisme de suspension de tête selon la revendication 10 ou 11, dans lequel l'élément de pressage (17, 27) comprend une plaque à ressort en acier inoxydable d'épaisseur uniforme.

13. Mécanisme de suspension de tête selon l'une quelconque des revendications précédentes, comprenant en outre un élément de support à articulation (21) fixé à l'une de ses extrémité sur la partie de support rigide (15) et présentant une arête d'articulation (22a) à son autre extrémité, l'arête d'articulation étant en contact contre la section élastique (11b) de la poutre de charge (11) au voisinage de la section rigide (11a) de la poutre de charge, la poutre de charge étant de ce fait capable de pivoter autour de l'arête d'articulation (22a).

14. Mécanisme de suspension de tête selon la revendication 13, prise en dépendance de l'une des revendications 10, 11 ou 12, dans lequel le déplacement de ladite extrémité de la plaque à ressort pivote la poutre de charge (11) autour de l'arête d'articulation (22a).

15. Mécanisme de suspension de tête selon la revendication 13 ou 14, dans lequel l'arête d'articulation (22a) comporte une pluralité de parties en projection, grâce à quoi le contact avec la poutre de charge (11) est assuré par des contacts ponctuels au niveau des parties en projection.
